**Europäisches Patentamt**

**European Patent Office**

**Office européen des brevets**

(19)

(11) Veröffentlichungsnummer: **0 262 396**
**A2**

(12) **EUROPÄISCHE PATENTANMELDUNG**

(21) Anmeldenummer: **87112394.9**

(22) Anmeldetag: **26.08.87**

(51) Int. Cl.⁴ **C01F 11/46**

(30) Priorität: **20.09.86 DE 3632032**

(43) Veröffentlichungstag der Anmeldung:
**06.04.88 Patentblatt 88/14**

(84) Benannte Vertragsstaaten:
**AT GB IT NL**

(71) Anmelder: **Hölter, Heinz, Dipl.-Ing.**
**Beisenstrasse 39-41**
**D-4390 Gladbeck(DE)**

(72) Erfinder: **Gebhard, Georg, Dr.**
**Gebhardstrasse 36**
**D-4300 Essen 1(DE)**
Erfinder: **Hölter, Heinz, Dipl.-Ing.**
**Beisenstrasse 39-41**
**D-4390 Gladbeck(DE)**

(74) Vertreter: **Schulte, Jörg, Dipl.-Ing.**
**Hauptstrasse 2**
**D-4300 Essen-Kettwig(DE)**

(54) **Verfahren zum Herstellen von Calciumsulfatdihydrat.**

(57) Die Erfindung betrifft ein Verfahren zum Herstellen von Rauchgasgips im Zuge der Rauchgasentschwefelung von Kraftwerkskesselfeuerungen, bei dem das Rauchgas in einem Waschturm mit Kalk oder Kalkstein enthaltender Waschwassersuspension behandelt wird und das dabei ausgewaschene Schwefeldioxid im Waschturmsumpf unter Zufuhr von Luftsauerstoff durch Oxidation sowie durch Kristallisation in Calciumsulfatdihydrat-Kristalle überführt wird. Ein Kreislauf wird aus dem Waschturmsumpf abgezogen und über Zerstäuberdüsen dem Waschturm wieder aufgegeben. Ein weiterer Kristallsuspensionsstrom wird kontinuierlich aus dem Waschturmsumpf abgezogen, einem Zyklonabscheider zugeführt und nach Abtrennung von Kristallschlamm in den Waschturmsumpf zurückgeführt. Der den Kristallschlamm führende Unterlauf des Zyklonabscheiders wird entwässert, Rauchgasgips abgezogen und der Klarlauf dem Waschturm aufgegeben. Aus dem Oberlauf wird ein Teilstrom abgetrennt und durch eine feststofffreie Flüssigkeit ersetzt. Durch die Steuerung der Teilstrommenge wird die Korngröße der abgezogenen Calciumsulfatdihydrat-Kristalle genau eingestellt, wobei der Feinanteil im Waschturmsumpf so eingestellt ist, daß mindestens 10 Gew. %, vorzugsweise 20 bis 70 Gew. %, der im Kristallsuspensionsstrom mitgeführten Feststoffe im Oberlauf des Zyklonabscheiders verbleiben.

## Verfahren zum Herstellen von Calciumsulfatdihydrat

Die Erfindung betrifft ein Verfahren zum Herstellen von Rauchgasgips im Zuge der Rauchgasentschwefelung von Kraftwerkskesselfeuerungen, bei dem das Rauchgas in einem Waschturm mit Kalk oder Kalkstein enthaltender Waschwassersuspension behandelt wird und das dabei ausgewaschene Schwefeldioxid im Waschturmsumpf unter Zufuhr von Luftsauerstoff durch Oxidation sowie durch Kristallisation in Calciumsulfatdihydrat-Kristalle überführt wird, bei dem ein Kreislaufstrom aus dem Waschturmsumpf abgezogen und über Zerstäuberdüsen dem Waschturm aufgegeben wird, sowie ein weiterer Kristallsuspensionsstrom kontinuierlich aus dem Waschturmsumpf abgezogen und mittels Zyklonabscheider in einen Kristallschlamm führenden Unterlauf und einen Feinanteile des Feststoffes aufweisenden und dem Waschturmsumpf wieder zuführenden Oberlauf aufgespalten wird, wobei der Unterlauf entwässert, Rauchgasgips abgezogen sowie der Klarlauf in den Waschturm zurückgeführt wird.

Bei dem gattungsgemäßen Verfahren ist im Waschturmsumpf ein pH-Wert von 4 bis 6 eingestellt. Die Zugabe von Kalk oder Kalkstein kann im Rahmen des Verfahrens an verschiedenen Stellen des Waschturms erfolgen. So ist aus VGB Kraftwerkstechnik 63 (1983) 4, Seiten 335 bis 344 einerseits bekannt, eine Aufschlämmung von Kalksteinen im oberen Bereich des Waschturmes aufzugeben, andererseits ist es auch bekannt, Calciumhydroxid in Form von Kalkmilch in den Waschturmsumpf einzuführen. Vorzugsweise wird das Rauchgas im Gegenstrom gewaschen. Denkbar ist es auch, das Rauchgas im Gleichstrom zur zerstäubten Waschwassersuspension zu führen.

Bei dem bekannten Verfahren wird lediglich der Feststoffgehalt im Waschturmsumpf konstant eingestellt, indem der Kristallsuspensionsstrom taktweise oder über eine Pumpe kontinuierlich geregelt aus dem Waschturmsumpf abgezogen und abgeschlämmt wird. Die abgetrennte Flüssigkeit wird in den Waschturm zurückgeführt. Der mitgeführte Kristallfeinanteil ist äußerst klein und liegt in der Größenordnung von etwa 1 Gew. %. Der nach dem bekannten Verfahren hergestellte Rauchgasgips ist grobkörnig und kann auf eine Restfeuchte von etwa 6 bis 7 Gew. % entwässert werden. Die Körnung des so hergestellten Rauchgasgipses ist beispielsweise gröber als das Kornspektrum von Flugasche. Sowohl die Kornverteilung als auch das Wasserbindevermögen ist nur in geringem Maße zu beeinflussen. Die geringe Kornfeinheit und die kleine Kristalloberfläche sind nachteilig bei der Herstellung deponiefähiger oder verwendungsfähiger Mischungen mit Flugasche. Insbesondere ist die Verfestigung der Mischungen aus Flugasche, Gips und Waschwassersuspensionsanteilen nicht befriedigend.

Der Erfindung liegt die Aufgabe zugrunde, ein Verfahren zu schaffen, bei dem ein Rauchgasgips mit großer Kornfeinheit sowie großer Kornoberfläche und zwar mit genau einstellbarer Korngröße der Calciumsulfatdihydrat-Kristalle hergestellt werden kann.

Die Aufgabe wird erfindungsgemäß dadurch gelöst, daß mindestens 10 Gew. % der in der Kristallsuspension enthaltenen Feststoffe einen Korndurchmesser von weniger als 20 $\mu$m aufweisen und als Feststoffeinanteile im Oberlauf des Zyklonabscheiders mitgeführt werden, daß aus dem Oberlauf ein Teilstrom abgetrennt und durch eine feststoffreie Flüssigkeit, vorzugsweise in Form des Klarlaufes ersetzt wird und dabei durch Steuerung der Teilstrommenge die Korngröße der abgezogenen Calciumsulfatdihydrat-Kristalle eingestellt wird, wobei durch Drosselung der Teilstrommenge feinere Calciumsulfatdihydrat-Kristalle sowie durch Vergrößerung der Teilstrommenge größere Calciumsulfatdihydrat-Kristalle eingestellt werden.

Überraschend ist es bei Anwendung dieses Verfahrens möglich, die Korngröße der aus der Waschwassersuspension abgetrennten Calciumsulfatdihydrat-Kristalle sehr genau einzustellen, wenn durch Veränderung des Teilstromes der des Oberlaufes mehr oder weniger Feststoff enthaltende Kristallsuspension zugeführt wird. Die Erfindung nutzt dabei die Erkenntnis, daß sekundäre Keimbildung der vorherrschende Keimbildungsmechanismus ist und die Keimbildungsgeschwindigkeit, d.h. die Anzahl der neu gelbildeten Keime je Zeiteinheit in der Waschwassersuspension durch die Häufigkeit und Intensität der Kollision der Kristalle in der Suspension beeinflußbar ist. Allein durch die Mengenregelung des Teilstromes ist sowohl eine Verstärkung als auch eine Abschwächung der den Prozeß bestimmenden Keimbildungsgeschwindigkeit möglich. Die zahlenmäßige Zuordnung zwischen Körnung des Rauchgasgipses einerseits und den Feststoffeinanteilen in der Waschwassersuspension andererseits ist dabei von weiteren Faktoren, wie zum Beispiel Fremdsalzen, Strömungsführung und dergleichen mit abhängig und somit eine anlagenspezifische Größe, die durch Versuch allerdings leicht ermittelt werden kann.

Eine zweckmäßige Weiterbildung der Erfindung sieht vor, daß 20 bis 70 Gew. % der in der Kristallsuspension mitgeführten Feststoffe im Oberlauf des Zyklonabscheiders mitgeführt werden. Wenn das Kornspektrum in der Waschwassersuspension einen beachtlichen Feinanteil aufweist, wie er gemäß Verfahren vorgegeben ist, ist es überraschenderweise möglich, die Kristallisation entsprechend ergänzend zu steuern. Der Feinanteil der Feststoffe im Waschturmsumpf wird dabei so klein gehalten, daß die Feststoffe von dem Zyklonabscheider nicht abgetrennt werden können.

Eine weitere zweckmäßige Ausbildung sieht vor, daß die im Teilstrom mitgeführten Feststoffe abgetrennt und der Klarlauf in den Waschturm zurückgeführt wird. Dadurch wird auch der Teilstrom, der ja nicht in den Waschturmsumpf zurückgeführt werden kann im Kreislauf bleibt und dabei so verarbeitet wird, daß er den Verfahrensablauf ansonsten sich nicht beeinflußt. Im Rahmen dieser Maßnahmen ermöglicht es das erfindungsgemäße Verfahren, die Wirkung von gelösten Komponenten in der Waschwassersuspension auf die Kristalltracht zu beeinflussen. Dadurch werden die Steuerungsmöglichkeiten der Kristallisation noch erweitert.

In weiterer Ausgestaltung des erfindungsgemäßen Verfahrens ist vorgesehen, daß der Teilstrom diskontinuierlich abgezogen wird, wobei Pausenintervalle und Abführintervalle abwechseln und daß der Mengenstrom in zeitlichen Mittel durch Einstellen der Pausenintervalle gesteuert wird. Damit ist eine Einstellung bzw. die Durchführung des Verfahrens weiter optimiert.

Weiter ist gemäß der Erfindung vorgesehen, daß der dem Waschturm aufzugebende Kalk oder Kalkstein mit einem Teil des in den Waschturm zurückgeführten Oberlaufs des Zyklonabscheiders angemaischt wird. Es versteht sich, daß die Gesamtwasserbilanz des Verfahrens beachtet werden muß. Ebenfalls im Rahmen der Erfindung liegt es, dem Waschturmsumpf silikatische Feinanteile zuzugeben. Besonders geeignet sind silikatische Feinanteile auf Basis Ton. Die Zugabe von silikatischen Feinanteilen, zum Beispiel Kaolin kann dann sinnvoll sein, wenn ein neuer Betriebszustand eingestellt werden muß. Durch die Zugabe zusätzlicher Feststoffeinanteile wird die sekundäre Keimbildung angeregt und die Einstellung des neuen stationären Zustandes beschleunigt.

Der den Zyklonabscheider verlassende Rauchgasgips wird nach einer Ausbildung der Erfindung entwässert und zu Formkörpern gepreßt. Dabei haben Versuche gezeigt, daß Druckfestigkeiten bis 5 N/mm$^2$ erreicht werden können, so daß derartige Formkörper für die verschiedensten Zwecke zum Einsatz gebracht werden können. Schließlich ist es auch möglich, daß der entwässerte Rauchgasgips als feinkörniger und als Füllstoff geeigneter Gips abgezogen wird, wobei vorteilhaft weitere Verarbeitungsschritte entfallen, so daß günstige Herstellungskosten beispielsweise für als Füllstoff in Papier vorgesehenen Gips erzielt werden können. Insgesamt gesehen ergibt sich somit eine vorteilhafte Verwendbarkeit des Gipses, wobei im ungünstigsten Fall der Gips allein oder zusammen mit Flugasche abgelagert werden kann.

Der nach dem erfindungsgemäßen Verfahren hergestellte Rauchgasgips weist eine sehr große Kornfeinheit mit entsprechend großer Oberfläche auf und ist überraschenderweise sehr porös. In der Kristallform unterscheidet sich der nach dem erfindungsgemäßen Verfahren hergestellte Rauchgasgips deutlich von den bekannten Produkten. Der erfindungsgemäß hergestellte Rauchgasgips ist flockenförmig, keinesfalls sind die Kristalle grobkörnig, blättchenförmig oder nadelförmig wie die Gipse nach dem Verfahren des Standes der Technik. Die Restfeuchtigkeit des mechanisch entwässerten Rauchgasgipses beträgt bei dem erfindungsgemäßen Verfahren etwa 30 % und ist damit wesentlich größer als nach dem Stand der Technik. Daraus leiten sich Vorteile ab. Die große Kornfeinheit mit großer Oberfläche bewirkt eine hohe Verfestigung von Mischungen aus Flugasche, Gips und Wasser aus der Rauchgasentschwefelungsanlage in Folge der Zwickelfüllung. Im übrigen ist aufgrund der großen Oberfläche eine außerordentlich große Reaktivität bei der chemischen Umsetzung mit Bestandteilen der Flugasche gegeben und dadurch eine geringe Auslaugung gewährleistet. Im Ergebnis weist der nach dem erfindungsgemäßen Verfahren hergestellter Rauchgasgips eine ausgezeichnete Deponiefähigkeit auf. Die Einbindung von Salzen und Metallen ist deutlich größer als bei Rauchgasgipsen, die nach dem bekannten Verfahren hergestellt sind. Auch die Druckfestigkeit ist höher. Fernerhin ist im Vergleich zu Rauchgasgips, der nach dem bekannten Verfahren hergestellt wurde, aufgrund der besonderen Produktionseigenschaften eine weitergehende Verwertungsmöglichkeit für Flugasche/Gipsmischungen gegeben. Hinzukommt, daß bei dem erfindungsgemäßen Verfahren aufgrund der besseren Wasseraufnahme des Gipses eine abwasserfreie Fahrweise möglich ist.

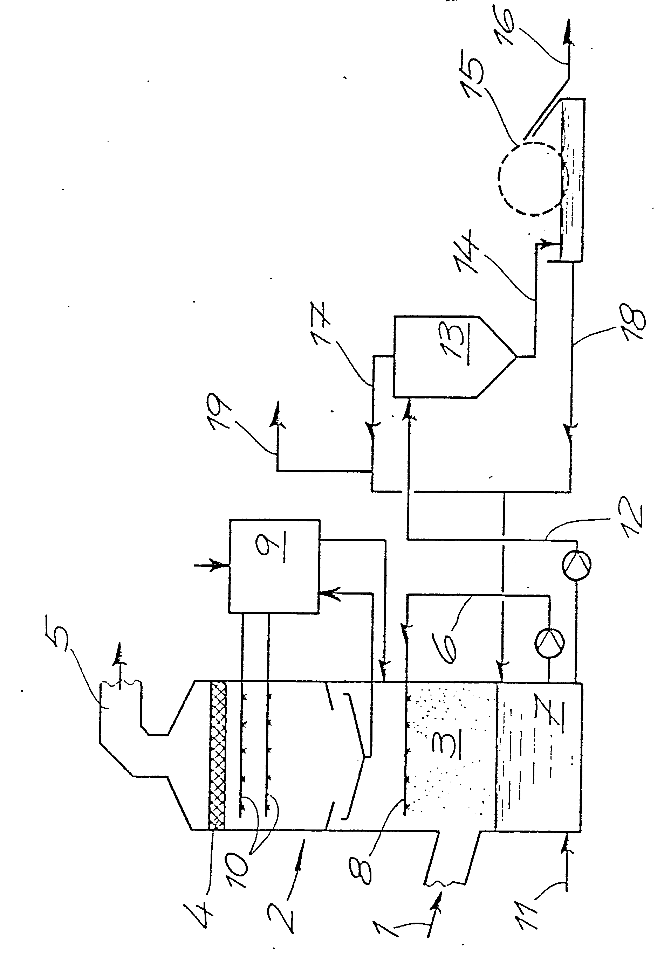

Im folgenden wird die Erfindung anhand einer lediglich ein Ausführungsbeispiel darstellenden Zeichnung ausführlicher erläutert. Die einzige Figur zeigt das Verfahrensschema sowie die wesentlichen Komponenten einer Anlage zur Durchführung des erfindungsgemäßen Verfahrens.

Das in der Figur dargestellte Verfahren dient zum Herstellen von im wesentlichen aus Calciumsulfatdihydrat bestehendem Rauchgasgips im Zuge der Rauchgasentschwefelung von Kraftwerkskesselfeuerungen.

Das Rauchgas (1) wird einem Waschturm (2) zugeführt und im Gegenstrom mit Kalk oder Kalkstein enthaltender Waschwassersuspension (3) behandelt. Dabei wird das im Rauchgas enthaltene Schwefeldioxid ausgewaschen. Das von SO₂ befreite Rauchgas tritt nach einer Tropfenabscheidung (4) am Waschturmkopf (5) aus. Die Waschwassersuspension wird in einem ersten Kreislaufstrom (6) aus dem Waschturmsumpf (7) abgezogen und über Zerstäuberdüsen (8) dem Waschturm aufgegeben. Im Ausführungsbeispiel wird Kalkstein als wässrige Aufschlämmung (9) im wesentlichen über Düsen (10), die im oberen Bereich des Waschturms angeordnet sind, aufgegeben. Im Rahmen des erfindungsgemäßen Verfahrens liegt es aber auch, Aufschlämmungen von Kalk oder Kalkstein dem Waschturmsumpf direkt zuzuführen. In einem solchen Fall wird die Waschwassersuspension in verschiedenen Etagen, die sich über die gesamte Waschturmhöhe erstrecken, in den Waschturm eingeführt.

Im Waschturmsumpf (7) ist ein pH-Wert von 4 bis 6 eingestellt. Fernerhin wird dem Waschturmsumpf Luftsauerstoff (11) zugeführt. Im Waschturmsumpf wird durch Oxidation sowie durch Kristallisation das ausgewaschene Schwefeldioxid in Calciumsulfatdihydrat-Kristalle überführt.

Aus dem Waschturmsumpf (7) wird ein Kristallsuspensionsstrom (12) abgezogen und einem Zyklonabscheider (13) zugeführt. In dem Zyklonabscheider werden Calciumsulfatdihydrat-Kristalle, die größer sind als das dem Zyklonabscheider zugeordnete Trennkorn, abgetrennt und als Kristallschlamm im Unterlauf (14) des Zyklonabscheiders (13) ausgeführt. Im Ausführungsbeispiel sei angenommen, daß der Zyklonabscheider mit einem Trennkorndurchmesser im Bereich von 10 bis 20 μm betrieben wird, wobei ein Feststoffteilchen, das dem Trennkorndurchmesser entspricht, definitionsgemäß zu gleichen Anteilen in den Oberlauf und in den Unterlauf gelangt. Der Kristallschlamm wird in einem nachgeschalteten Eindicker (15), beispielsweise einem Vakuumtrommelfilter, mechanisch entwässert und als Rauchgasgips (16) abgezogen. Der Oberlauf (17) des Zyklonabscheiders sowie der ei der mechanischen Entwässerung des Kristallschlamms anfallende Klarlauf (18) werden in den Waschturmsumpf (7) zurückgeführt.

Die Menge der Feinanteile im Waschturmsumpf (7) ist so eingestellt, daß mindestens 10 Gew. %, vorzugsweise 20 bis 70 Gew. %, der mitgeführten Feststoffe im Oberlauf (17) des Zyklonabscheiders (13) bleiben. Sie werden im wesentlichen als Kristallkeime in den Waschturmsumpf (7) zurückgeführt. Die Konzentration der Feststoffeinanteile im Waschturmsumpf beeinflußt die Körnung des bei dem Verfahren hergestellten Rauchgasgipses. Eine größere Anzahl von Kristallkeimen regt eine sekundäre Keimbildung in der Waschwassersuspension an und führt zu einer größeren Kornfreiheit des Rauchgasgipses (16). Entsprechend wird der Rauchgasgips (16) grober, wenn die sekundäre Keimbildung reduziert wird, indem die Anzahl der Kristallkeime in der Waschwassersuspension reduziert wird. Bei dem im Ausführungsbeispiel dargestellten Verfahren wird die Körnung des Rauchgasgipses (16) mit Hilfe eines aus dem Oberlauf (17) des Zyklonabscheiders abgeführten Suspensionsregelstroms (19) genau eingestellt. Die Menge des Suspensionsregelstroms (19) wird ensprechend der Körnung des Rauchgasgipses (16) angepaßt. Zur Einstellung eines feineren Rauchgasgipses wird die abgetrennte Menge gedrosselt, zur Einstellung eines groberen Produktes erhöht. Im stätionären Betriebszustand ist auch eine abwasserfreie Fahrweise möglich. Nach bevorzugter Ausführung der Erfindung wird der Suspensionsregelstrom (19) diskontinuierlich abgeführt und die Menge durch Einstellung der Intervallzeiten geregelt. Eine weitere im Ausführungsbeispiel allerdings nicht dargestellte Ausgestaltung des Verfahrens besteht darin, daß der aus dem Oberlauf abgetrennte Suspensionsregelstrom aufkonzentriert und der abgezogene Klarlauf in den Waschturmsumpf zurückgeführt wird. Dadurch besteht die Möglichkeit, die Zusammensetzung der gelösten Komponenten in der Waschwassersuspension zu beeinflussen. Im Rahmen der Erfindung liegt es auch, daß der dem Waschturm aufzugebende Kalk oder Kalkstein mit einem Teilstrom des Oberlaufes angemaischt wird. Eine weitere, in der Figur ebenfalls nicht dargestellte erfindungsgemäße Maßnahme besteht darin, dem Waschturmsumpf silikatische Feinanteile, insbesondere auf Basis Ton, zuzugeben. Dadurch kann die Einstellung eines neuen stationären Betriebszustandes beschleunigt werden.

## Ansprüche

1. Verfahren zum Herstellen von Rauchgasgips im Zuge der Rauchgasentschwefelung von Kraftwerkskesselfeuerungen, bei dem das Rauchgas in einem Waschturm mit Kalk oder Kalkstein enthaltender Waschwassersuspension behandelt wird und das dabei ausgewaschene Schwefeldioxid im Waschturmsumpf unter Zufuhr von Luftsauerstoff durch Oxidation sowie durch Kristallisation in Calciumsulfatdihydrat-Kristalle überführt wird, bei dem ein Kreislaufstrom aus dem Waschturmsumpf abgezogen und über Zerstäuberdüsen dem Waschturm aufgegeben wird, sowie ein weiterer Kristallsuspensionsstrom kontinuierlich aus dem Waschturmsumpf abgezogen und mittels Zyklonabscheider in einen Kristallschlamm führenden Unterlauf und einen Feinanteile des Feststoffes aufweisenden und dem Waschturmsumpf wieder zuführenden Oberlauf aufgespalten wird, wobei der Unterlauf entwässert, Rauchgasgips abgezogen sowie der Klarlauf in den Waschturm zurückgeführt wird,

**dadurch gekennzeichnet,**

daß mindestens 10 Gew.% der in der Kristallsuspension enthaltenen Feststoffe einen Korndurchmesser von weniger als 20 µm aufweisen und als Feststoffeinanteile im Oberlauf des Zyklonabscheiders mitgeführt werden, daß aus dem Oberlauf ein Teilstrom abgetrennt und durch eine feststoffreie Flüssigkeit, vorzugsweise in Form des Klarlaufes ersetzt wird und dabei durch Steuerung der Teilstrommenge die Korngröße der abgezogenen Calciumsulfatdihydrat-Kristalle eingestellt wird, wobei durch Drosselung der Teilstrommenge feinere Caliumsulfatdihydrat-Kristalle sowie durch Vergrößerung der Teilstrommenge größere Calciumsulfatdihydrat-Kristalle eingestellt werden.

2. Verfahren nach Anspruch 1,

**dadurch gekennzeichnet,**

daß 20 bis 70 Gew.% der in der Kristallsuspension mitgeführten Feststoffe im Oberlauf des Zyklonabscheiders mitgeführt werden.

3. Verfahren nach Anspruch 1 oder Anspruch 2,

**dadurch gekennzeichnet,**

daß die im Teilstrom mitgeführten Feststoffe abgetrennt und der Klarlauf in den Waschturm zurückgeführt wird.

4. Verfahren nach einem der Ansprüche 1 bis 3,

**dadurch gekennzeichnet,**

daß der Teilstrom diskontinuierlich abgezogen wird, wobei Pausenintervalle und Abführintervalle abwechseln und daß der Mengenstrom im zeitlichen Mittel durch Einstellen der Pausenintervalle gesteuert wird.

5. Verfahren nach einem der Ansprüche 1 bis 4,

**dadurch gekennzeichnet,**

daß der dem Waschturm aufzugebende Kalk oder Kalkstein mit einem Teil des in den Waschturm zurückgeführten Oberlaufs des Zyklonabscheiders angemaischt wird.

6. Verfahren nach einem der Ansprüche 1 bis 5,

**dadurch gekennzeichnet,**

daß dem Waschturmsumpf silikatische Feinanteile zugegeben werden.

7. Verfahren nach Anspruch 1,

**dadurch gekennzeichnet,**

daß der entwässerte Rauchgasgips zu Formkörpern gepreßt wird.

8. Verfahren nach Anspruch 1,

**dadurch gekennzeichnet,**

daß der entwässerte Rauchgasgips als feinkörniger und als Füllstoff geeigneter Gips abgezogen wird.